# EUROPÄISCHE PATENTSCHRIFT

(11) **EP 4 302 066 B1**
(45) Veröffentlichungstag und Bekanntmachung des Hinweises auf die Patenterteilung: **07.05.2025**
(21) Anmeldenummer: 22707108.1
(22) Anmeldetag: 21.02.2022
(51) Int. Cl.: G01N 9/00

(54) **MODULARES MESSGERÄT ZUM ERMITTELN EINER DICHTE EINES MESSMEDIUMS**
MODULAR MEASURING DEVICE FOR DETERMINING THE DENSITY OF A MEASUREMENT MEDIUM
DISPOSITIF DE MESURE MODULAIRE POUR LA DÉTERMINATION DE LA DENSITÉ D'UN MILIEU DE MESURE

(30) Priorität: 05.03.2021 DE 102021105397
(43) Veröffentlichungstag der Anmeldung: 10.01.2024
(73) Patentinhaber: Endress+Hauser Flowtec AG, 4153 Reinach (CH)
(72) Erfinder: BITTO, Ennio, 4147 Aesch (CH); SCHWENTER, Benjamin, 4226 Breitenbach (CH); WERNER, Marc, 79639 Grenzach-Wyhlen (DE)
(74) Vertreter: Endress + Hauser Group Services (Deutschland) AG+Co. KG
(86) Internationale Anmeldenummer: PCT/EP2022/054246
(87) Internationale Veröffentlichungsnummer: WO 2022/184486

(56) Entgegenhaltungen:
- WO-A1-2011/099989
- DE-A1- 4 026 724
- JP-A- 2003 121 234

## Beschreibung

Die Erfindung betrifft ein modulares Messgerät zum Ermitteln einer Dichte eines Messmediums.

Solche Messgeräte werden auch Coriolis-Messgeräte genannt. Zur Messung der Dichte eines Messmediums wird dieses durch ein Schwingungsrohr des Messgerätes geleitet, während das Schwingungsrohr durch einen Erreger in Schwingung versetzt wird und die resultierende Schwingung des Schwingungsrohres gemessen wird. Die resultierende Schwingung ist abhängig von der Dichte des durch das Schwingungsrohr fließenden Messmediums. Durch Vergleich der Erregerschwingung und der resultierenden Schwingung kann schließlich auf die Dichte des Messmediums geschlossen werden. Bei diesem Vergleich wird zum Beispiel eine Phasenverschiebung oder eine Amplitudenänderung zwischen der Erregerschwingung und der resultierenden Schwingung des Schwingungsrohrs verwendet.

Die resultierende Schwingung ist jedoch auch von der Temperatur des Schwingungsrohres abhängig, welche beispielsweise ein Flächenträgheitsmoment des Schwingungsrohres und somit der resultierenden Schwingung des Schwingungsrohres beeinflusst. Eine genaue Temperaturmessung des Schwingungsrohres ist somit unabdingbar, um die Dichte des Messmediums mit höchster Genauigkeit bestimmen zu können.

In manchen industriellen Anwendungen werden Messmedien verwendet, welche eine zeitaufwendige und kostenintensive Reinigung des Schwingungsrohres mit sich bringen. Für derartige Anwendungen ist es wünschenswert, Einweg-Schwingungsrohre zu verwenden, welche wechselbar im Coriolis-Messgerät angeordnet sind. Ein Beispiel für derartige Messgeräte wird in der WO 2011/099989 A1 offenbart. Die WO 2011/099989 A1 offenbart ein Coriolis-Durchflussmessgerät, bei dem das Erreger- und Sensorsystem mittelbar an den Kunststoff-Messrohren befestigt sind und somit bei einem Wechsel der Messrohre mit ausgetauscht werden. Weiterhin wird ein an den Kunststoff-Messrohren befestigter Temperatursensor offenbart. Ein Wechsel des Schwingungsrohres impliziert in dem Fall auch einen Wechsel des Temperatursensors, da dieser am Schwingungsrohr unlösbar befestigt ist.

Des Weiteren ist je nach industrieller Anwendung ein vorbestimmter Durchmesser des Schwingungsrohres notwendig, um unterschiedliche Durchflussraten zu realisieren. Abhängig von der gewünschten Durchflussrate ist es daher notwendig, verschiedene Schwingungsrohre mit unterschiedlichen Durchmessern zu verwenden.

Es ist daher eine Aufgabe der Erfindung, ein modulares Messgerät bereitzustellen, welches die Verwendung von verschieden dicken Schwingungsrohren ermöglicht und gleichzeitig kostengünstig und präzise ist.

Diese Aufgabe wird erfindungsgemäß gelöst durch ein modulares Messgerät gemäß Anspruch 1.

Das erfindungsgemäße modulare Messgerät zum Ermitteln einer Dichte eines Messmediums, umfasst: ein Trägermodul, ein erstes Messrohrmodul und mindestens ein weiteres Messrohrmodul. Das Trägermodul weist eine Aufnahme zum lösbaren Befestigen des ersten Messrohrmoduls oder des mindestens einen weiteren Messrohrmoduls, einen kontaktlosen Temperatursensor zum Ermitteln einer Schwingungsrohrtemperatur, eine primäre Erregerkomponente sowie eine primäre Sensorkomponente auf. Jedes Messrohrmodul weist eine zur Aufnahme des Trägermoduls komplementäre Fixierung, ein Schwingungsrohr, eine zur primären Erregerkomponente komplementäre sekundäre Erregerkomponente und eine zu primären Sensorkomponente komplementäre sekundäre Sensorkomponente auf. Jedes Schwingungsrohr der Messrohrmodule weist einen verschiedenen Rohrdurchmesser, einen geraden ersten Rohrschenkel, einen geraden zweiten Rohrschenkel, einen gekrümmten ersten Rohrbogen und einen gekrümmten zweiten Rohrbogen auf. Die ersten Rohrschenkel sind jeweils an einem primären Verbindungspunkt mit den ersten Rohrbögen verbunden. Die ersten Rohrbögen sind mit den zweiten Rohrbögen verbunden, und die zweiten Rohrbögen sind jeweils mit den ersten Rohrschenkeln an einem sekundären Verbindungspunkt verbunden. Der primäre Verbindungspunkt und der sekundäre Verbindungspunkt liegen je Messrohrmodul in einer jeweiligen Ebene. Die Ebenen weisen zueinander einen jeweiligen Abstand auf, welcher einer Differenz zwischen den jeweiligen Rohrdurchmesser entspricht. Die ersten Rohrbögen und die zweiten Rohrbögen weisen einen identischen Innenradius oder einen identischen Außenradius auf, so dass sich die den jeweiligen Schwingungsrohren zugehörige Mittellinien in einem ersten Schnittpunkt sowie in einem zweiten Schnittpunkt schneiden. Der kontaktlose Temperatursensor ist derart angeordnet, dass wenn ein Messrohrmodul im Trägermodul aufgenommen ist, der kontaktlose Temperatursensor auf den ersten Schnittpunkt oder den zweiten Schnittpunkt gerichtet ist.

Anhand des erfindungsgemäßen modularen Messgeräts wird ermöglicht, dass verschiedene Schwingungsrohre mit unterschiedlichem Rohrdurchmesser verwendbar sind. Somit wird erlaubt, abhängig von der gewünschten Messgenauigkeit ein entsprechendes Schwingungsrohr zu verwenden. Des Weiteren wird ermöglicht, anhand des kontaktlosen Temperatursensors für jedes Schwingungsrohr eine Schwingungsrohrtemperatur auf kostengünstige, zuverlässige und genaue Weise zu ermitteln. Durch die kontaktlose Temperaturmessung werden weniger Teile des modularen Messgerätes nur einmal verwendet, was kostensenkend und umweltschonend ist. Durch die spezifische Form des verschiedenen Messrohre wird garantiert, dass der Temperatursensor immer orthogonal auf die zu messende Oberfläche der verschiedenen Messrohre steht, wodurch eine präzise Temperaturmessung ermöglicht wird.

Gemäß einer Ausführungsform der Erfindung ist zwischen dem ersten Rohrbogen und dem zweiten Rohrbogen ein Rohrstück angeordnet, welches den ersten Rohrbogen und den zweiten Rohrbogen verbindet.

Gemäß einer Ausführungsform der Erfindung ist das Rohrstück gerade.

Gemäß einer Ausführungsform der Erfindung erstrecken sich der erste Rohrschenkel und der zweite Rohrschenkel parallel zueinander.

Gemäß einer Ausführungsform der Erfindung ist die sekundäre Erregerkomponente des Messrohrmoduls am Messrohrmodul auf einer Längsachse angeordnet. Das Schwingungsrohr ist zur Längsachse symmetrisch.

Gemäß einer Ausführungsform der Erfindung umfasst die primäre Erregerkomponente eine Spule und die sekundäre Erregerkomponente einen Permanentmagneten, oder die sekundäre Erregerkomponente umfasst eine Spule und die primäre Erregerkomponente umfasst einen Permanentmagneten.

Gemäß einer Ausführungsform der Erfindung ist die sekundäre Sensorkomponente am ersten Rohrschenkel oder am zweiten Rohrschenkel des Messrohrmoduls angeordnet.

Gemäß einer Ausführungsform der Erfindung weist jedes Messrohrmodul mindestens zwei identische Schwingungsrohre auf.

Gemäß einer Ausführungsform der Erfindung erstrecken sich die Messrohrmodule entlang einer Längsachse, zu welcher das Schwingungsrohr symmetrisch ist. Alle Messrohrmodule weisen dieselbe Erstreckungslänge entlang der Längsachse auf.

Gemäß einer Ausführungsform der Erfindung erstrecken sich die Messrohrmodule entlang einer Längsachse, zu welcher das Schwingungsrohr symmetrisch ist. Alle Schwingungsrohre schneiden sich in einem dritten Schnittpunkt auf der Längsachse.

Die Erfindung wird anhand der nachfolgenden Figurenbeschreibung näher erläutert. Es zeigen:
- Fig. 1: eine Darstellung eines erfindungsgemäßen modularen Messgeräts,
- Fig. 2: eine Seitenansicht einer ersten Ausführungsform eines Messrohrmoduls,
- Fig. 3: eine Seitenansicht einer zweiten Ausführungsform eines Messrohrmoduls,
- Fig. 4: eine Seitenansicht einer dritten Ausführungsform eines Messrohrmoduls,
- Fig. 5: eine Seitenansicht von drei übereinander angeordneten Messrohrmodulen mit schematischen Projektionen der Rohrquerschnitte, und
- Fig. 6: eine vergrößerte Ansicht der in Fig. 5 dargestellten überlagerten Messrohrmodulen.

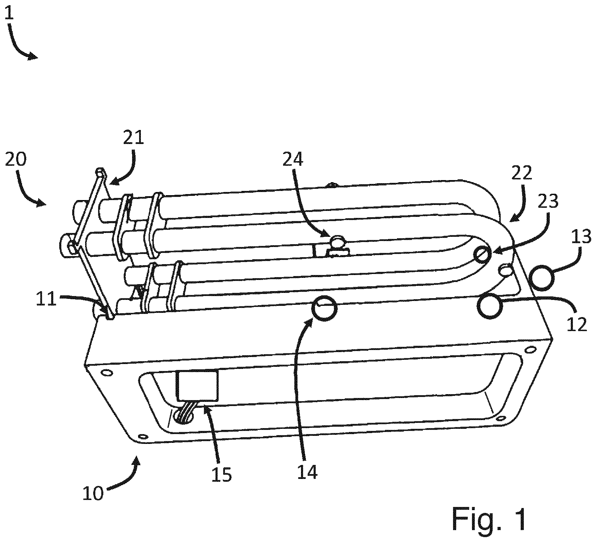

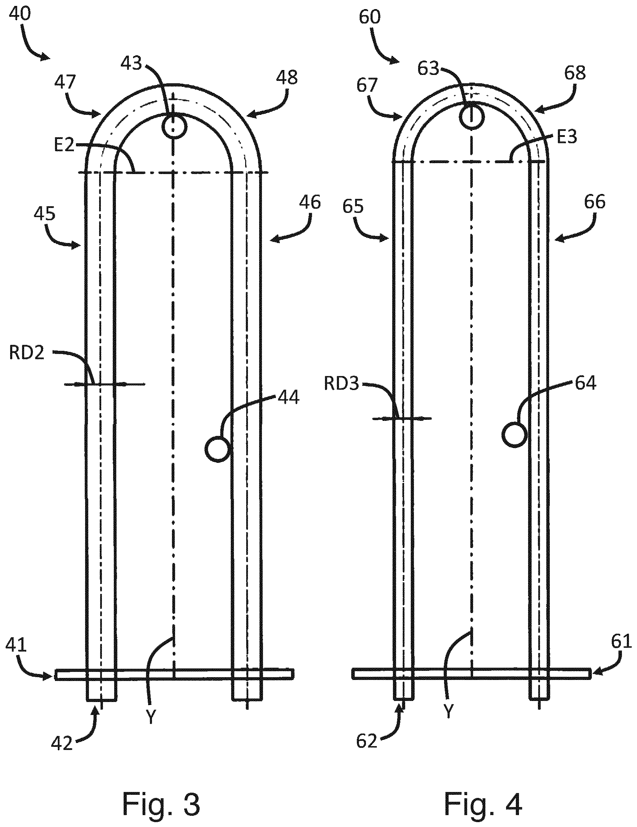

Figur 1 zeigt das erfindungsgemäße modulare Messgerät 1 zum Ermitteln einer Dichte eines Messmediums. Das modulare Messgerät 1 umfasst ein Trägermodul 10, ein erstes Messrohrmodul 20 und mindestens ein weiteres Messrohrmodul 40, 60. Beispielsweise umfasst das modulare Messgerät 1 drei verschiedene Messrohrmodule, nämlich das erste Messrohrmodul 20, ein zweites Messrohrmodul 40 und ein drittes Messrohrmodul 60 (siehe Figuren 3 bis 6). Selbstverständlich kann das modulare Messgerät 1 auch mehr als drei verschiedene Messrohrmodule aufweisen. Das modulare Messgerät 1 weist vorzugsweise eine Steuereinheit 15 auf, welche dazu geeignet ist, die vom modularen Messgerät 1 ermittelten Messwerte zu verarbeiten und auszuwerten.

Das Trägermodul 10 des modularen Messgeräts 1 weist eine Aufnahme 11 zum lösbaren Befestigen der Messrohrmodule 20, 40, 60, einen kontaktlosen Temperatursensor 12, eine primäre Erregerkomponente 13 sowie eine primäre Sensorkomponente 14 auf. Der kontaktlose Temperatursensor 12, die primäre Erregerkomponente 13 sowie die primäre Sensorkomponente 14 sind mit der Steuereinheit 15 verbunden, um von der Steuereinheit 15 gesteuert zu werden. Das Trägermodul 10 ist vorzugsweise aus einem korrosionsbeständigen Metall oder einem Kunststoff hergestellt. Die Aufnahme 11 ist beispielsweise, wie in Figur 1 dargestellt, eine Nut, oder aber eine anders ausgestaltete Aufnahme 11. Der kontaktlose Temperatursensor 12 ist zum Beispiel ein Infrarot-Sensor, ein Lasersystem zur Temperaturmessung, oder ein anderer auf einem kontaktlosen Messverfahren beruhender Temperatursensor. Der Temperatursensor 12 ist in Figur 1 nur schematisch dargestellt. Die primäre Erregerkomponente 13 ist beispielsweise eine Spule, welche dazu geeignet ist, ein Magnetfeld zu erzeugen. Auf die Erregerkomponente 13 wird später im Detail eingegangen. Die Erregerkomponente 11 ist in Figur 1 nur schematisch dargestellt. Die primäre Sensorkomponente 14 ist zum Beispiel eine Spule, welche dazu geeignet ist, ein Magnetfeld zu detektieren. Auch auf die primäre Sensorkomponente 14 wird später im Detail eingegangen. Auch die primäre Sensorkomponente 14 ist in Figur 1 nur schematisch dargestellt.

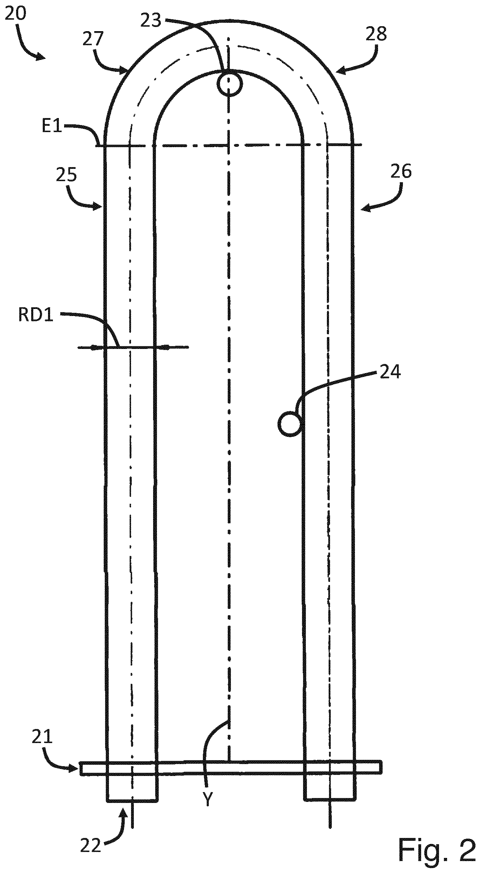

Wie in Figuren 2 bis 4 dargestellt, weist jedes Messrohrmodul 20, 40, 60 des modularen Messgeräts 1 eine zur Aufnahme 11 des Trägermoduls 10 komplementäre Fixierung 21, 41, 61, ein Schwingungsrohr 22, 42, 62, eine zur primären Erregerkomponente 13 komplementäre sekundäre Erregerkomponente 23, 43, 63 und eine zu primären Sensorkomponente 14 komplementäre sekundäre Sensorkomponente 24, 44, 64 auf.

Die Fixierung 21, 41, 61 ist zum Beispiel ein plattenförmiges Element, mit einer zur Breite der Nut entsprechenden Dicke, so dass die Fixierung 21, 41, 61 in die Nut eingeschoben werden kann. Die Fixierung 21, 41, 61 und/oder die Aufnahme 11 weisen vorzugsweise einen Anschlag auf, um das Messrohrmodul 20, 40, 60 in einer vorbestimmten und reproduzierbaren Position im Trägermodul 10 anzuordnen. Selbstverständlich sind auch andere Ausführungsformen der Fixierung möglich, vorausgesetzt diese erlauben ein formschlüssiges und präzises Halten der Messrohrmodule 20, 40, 60 in dem Trägermodul 10 des modularen Messgeräts 1.

Die sekundäre Erregerkomponente 23, 43, 63 des Messrohrmoduls 20, 40, 60 ist vorzugsweise am Messrohrmodul 20, 40, 60 auf einer Längsachse Y angeordnet, wobei das Schwingungsrohr 22, 42, 62 zur Längsachse Y symmetrisch ist. Entweder umfasst die primäre Erregerkomponente 13 eine Spule und die sekundäre Erregerkomponente 23, 43, 63 umfasst einen Permanentmagneten, oder die sekundäre Erregerkomponente 23, 43, 63 umfasst eine Spule und die primäre Erregerkomponente 13 umfasst einen Permanentmagneten. Die sekundäre Erregerkomponente 23, 43, 63 ist vorzugsweise auf einer Innenseite eines Rohrschenkels 25, 26, 45, 46, 65, 66, also einer Seite, welche der Längsachse Y zugewandt ist, angeordnet. Somit ist die sekundäre Erregerkomponente 23, 43, 63 vor Beschädigungen besonders gut geschützt.

Die sekundäre Sensorkomponente 24, 44, 64 ist vorzugsweise am ersten Rohrschenkel 25, 45, 65 oder am zweiten Rohrschenkel 26, 46, 66 des Messrohrmoduls 20, 40, 60 angeordnet. Entweder umfasst die primäre Sensorkomponente 14 eine Spule und die sekundäre Sensorkomponente 24, 44, 64 umfasst einen Permanentmagneten, oder die sekundäre Sensorkomponente 24, 44, 64 umfasst eine Spule und die primäre Sensorkomponente 14 umfasst einen Permanentmagneten. Die sekundäre Sensorkomponente 24, 44, 64 ist vorzugsweise auf einer Innenseite eines Rohrschenkels 25, 26, 45, 46, 65, 66, also einer Seite, welche der Längsachse Y zugewandt ist, angeordnet. Somit ist die sekundäre Sensorkomponente 24, 44, 64 vor Beschädigungen besonders gut geschützt.

Wie in Figur 2 bis 4 dargestellt, weist jedes Schwingungsrohr 22, 42, 62 der Messrohrmodule 20, 40, 60 einen verschiedenen Rohrdurchmesser RD1, RD2, RD3, einen geraden ersten Rohrschenkel 25, 45, 65, einen geraden zweiten Rohrschenkel 26, 46, 66, einen gekrümmten ersten Rohrbogen 27, 47, 67 und einen gekrümmten zweiten Rohrbogen 28, 48, 68 auf. Die Schwingungsrohre 22, 42, 62 weisen vorzugsweise eine kreisförmige Querschnittsform auf. Selbstverständlich können die Schwingungsrohre auch eine andere beliebige Querschnittsform aufweisen, sofern diese mit der technischen Lehre dieser Erfindung kompatibel ist. Die Schwingungsrohre 22, 42, 62 sind vorzugsweise aus korrosionsbeständigem Metall, z.B. rostfreier Stahl, oder Kunststoff hergestellt. Die Rohrdurchmesser RD1, RD2, RD3 der Schwingungsrohre 22, 42, 62 der Messrohrmodule 20, 40, 60 betragen vorzugsweise zwischen 3 und 15 mm. Der Rohrdurchmesser wird an der äußeren Oberfläche des Schwingungsrohres gemessen.

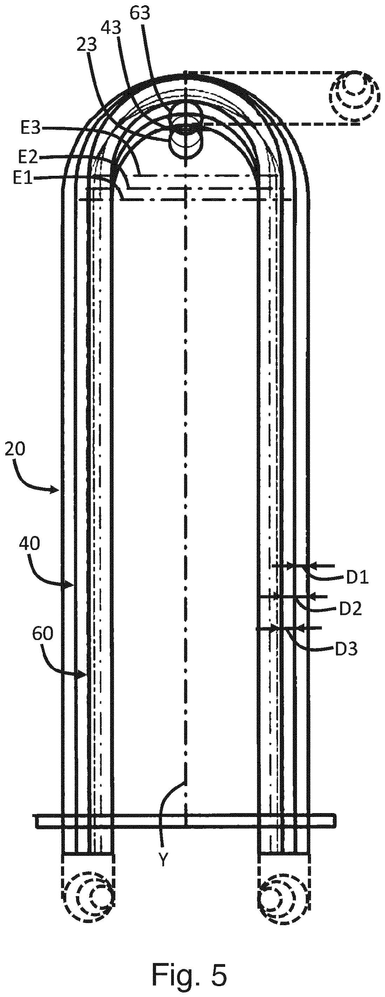

Figur 5 zeigt eine überlagerte Seitenansicht der Messrohrmodule 20, 40, 60. In dieser Darstellung ist eine Differenz D1 zwischen dem Rohrdurchmesser RD1 des Schwingungsrohrs 22 des ersten Messrohrmoduls 20 und dem Rohrdurchmesser RD2 des Schwingungsrohrs 42 des zweiten Messrohrmoduls 40 gut erkennbar. Ebenso wird eine Differenz D2 zwischen dem Rohrdurchmesser RD1 des Schwingungsrohrs 22 des ersten Messrohrmoduls 20 und dem Rohrdurchmesser RD3 des Schwingungsrohrs 62 des dritten Messrohrmoduls 60 gezeigt, sowie eine Differenz D3 zwischen dem Rohrdurchmesser RD2 des Schwingungsrohrs 42 des zweiten Messrohrmoduls 40 und dem Rohrdurchmesser RD3 des Schwingungsrohrs 62 des dritten Messrohrmoduls 60.

Figur 5 zeigt ebenso, des bessern Verständnisses halber, eine Projektion eines Querschnitts der Schwingungsrohre 22, 42, 62 an verschiedenen Stellen (gestrichelt dargestellt). Diese überlagerten Ansichten ergeben sich, wenn die Messrohrmodule 20, 40, 60 jeweils im Trägermodul 10 angeordnet werden. Durch die Aufnahme 11 des Trägermoduls 10 und die Fixierung 21, 41, 61 der Messrohrmodule 20, 40, 60 ist eine präzise Positionierung der Messrohrmodule 20, 40, 60 im Trägermodul 10 reproduzierbar. In Figur 5 wird ebenso eine zum ersten Messrohrmoduls 20 zugeordnete Ebene E1, eine zum zweiten Messrohrmoduls 40 zugeordnete Ebene E2 sowie eine zum dritten Messrohrmoduls 60 zugeordnete Ebene E3 dargestellt. Die Ebenen E1, E2, E3 definieren einen Verbindungspunkt, bzw. vielmehr eine Verbindungsebene zwischen den geraden Rohrschenkeln 25, 26, 45, 46, 65, 66 und den gekrümmten Rohrbögen 27, 28, 47, 48, 67, 68. Auf die Verbindungspunkte wird nachfolgend im Detail eingegangen. Unter Verbindungspunkt wird in diesem Kontext die Verbindungsstelle zwischen einem geraden Rohrschenkel und einem gekrümmten Rohrbogen verstanden. Die Verbindungsstelle weist also bei einem zylindrischen Schwingungsrohr eine Kreisform auf.

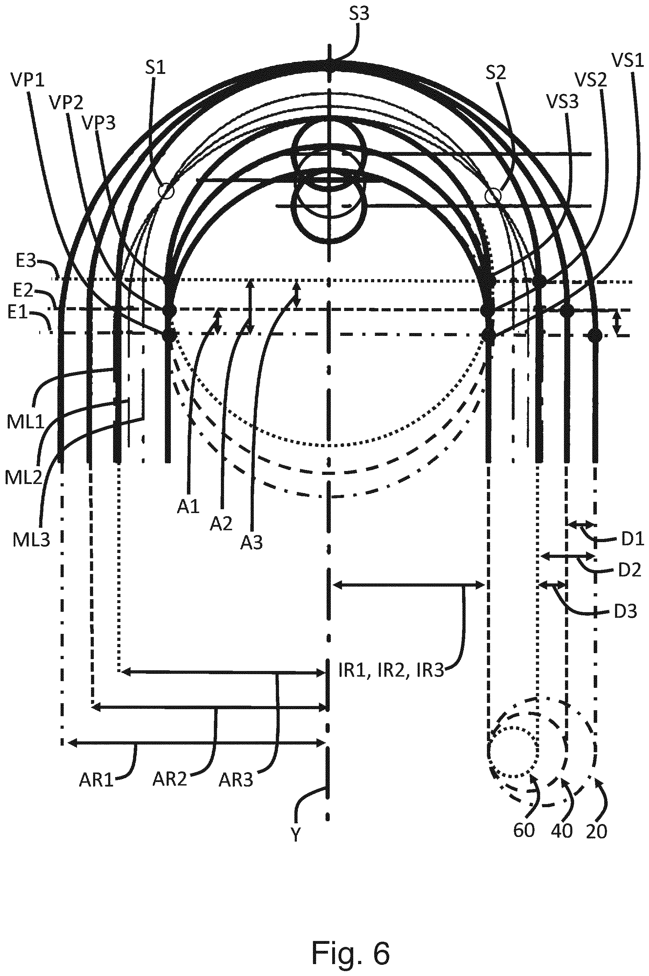

In Figur 6 wurden des besseren Verständnisses halber, für die verschiedenen Messrohrmodule jeweils eine unterschiedliche Linienart verwendet. Informationen, welche sich auf das erste Messrohrmodul 20 beziehen, wurden mit einer strichpunktierten Linie dargestellt. Informationen, welche sich auf das zweite Messrohrmodul 40 beziehen, wurden mit einer gestrichelten Linie dargestellt. Informationen, welche sich auf das dritte Messrohrmodul 60 beziehen, wurden mit einer punktierten Linie dargestellt.

Figur 6 zeigt, dass die ersten Rohrschenkel 25, 45, 65 jeweils an einem primären Verbindungspunkt VP1, VP2, VP3 mit den ersten Rohrbögen 27, 47, 67 verbunden sind. Die ersten Rohrbögen 27, 47, 67 sind mit den zweiten Rohrbögen 28, 48, 68 verbunden. Die zweiten Rohrbögen 28, 48, 68 sind jeweils mit den ersten Rohrschenkeln 25, 45, 65 an einem sekundären Verbindungspunkt VS1, VS2, VS3 verbunden. In anderen Worten ist jedem Messrohrmodul 20, 40, 60 ein primärer Verbindungspunkt und ein sekundärer Verbindungspunkt zuordenbar, wie aus Figur 6 ersichtlich. Der primäre Verbindungspunkt VP1, VP2, VP3 und der sekundäre Verbindungspunkt VS1, VS2, VS3 liegen je Messrohrmodul 20, 40, 60 in der jeweiligen dem Messrohrmodul zugeordneten Ebene E1, E2, E3. Die Ebenen E1, E2, E3 sind durch einen vorbestimmten Abstand parallel zueinander angeordnet. Die Ebene E1 des ersten Messrohrmoduls 20 ist zur Ebene E2 des zweiten Messrohrmoduls 40 mit einem Abstand A1 beabstandet. Die Ebene E1 des ersten Messrohrmoduls 20 ist zur Ebene E3 des dritten Messrohrmoduls 60 mit einem Abstand A2 beabstandet. Die Ebene E2 des zweiten Messrohrmoduls 40 ist zur Ebene E3 des dritten Messrohrmoduls 60 mit einem Abstand A3 beabstandet.

Der Abstand A1 entspricht einer Differenz D1 zwischen dem Rohrdurchmesser RD1 des Schwingungsrohres 22 des ersten Messrohrmoduls 20 und dem Rohrdurchmesser RD2 des Schwingungsrohres 42 des zweiten Messrohrmoduls 40. Der Abstand A2 entspricht einer Differenz D2 zwischen dem Rohrdurchmesser RD1 des Schwingungsrohres 22 des ersten Messrohrmoduls 20 und dem Rohrdurchmesser RD3 des Schwingungsrohres 62 des dritten Messrohrmoduls 60. Der Abstand A3 entspricht einer Differenz D3 zwischen dem Rohrdurchmesser RD2 des Schwingungsrohres 42 des zweiten Messrohrmoduls 40 und dem Rohrdurchmesser RD3 des Schwingungsrohres 62 des dritten Messrohrmoduls 60.

Wie in Figur 6 durch die verschiedenen versetzten Kreislinien veranschaulicht, weisen die ersten Rohrbögen 27, 47, 67 und die zweiten Rohrbögen 28, 48, 68 vorzugsweise einen identischen Innenradius IR1, IR2, IR3 auf. Alternativ zu einem identischen Innenradius können die verschiedenen Rohrbögen auch einen identischen Außenradius AR1, AR2, AR3 aufweisen (in Figur 6 nur für das erste Messrohrmodul angedeutet). Durch die Beabstandung der Ebenen E1, E2, E3 sowie die identischen Innenradien IR1, IR2, IR3 bzw. identischen Außenradien AR1, AR2, AR3 ergibt sich, dass sich die den Schwingungsrohren 22, 42, 62 zugehörige Mittellinien ML1, ML2, ML3 in einem ersten Schnittpunkt S1 sowie in einem zweiten Schnittpunkt S2 schneiden. Die jeweilige Mittellinie des Schwingungsrohres verläuft durch das Zentrum des Schwingungsrohres.

Das erste Schwingungsrohr weist also eine Mittelline ML1 auf. Das zweite Schwingungsrohr weist also eine Mittelline ML2 auf. Das dritte Schwingungsrohr weist also eine Mittelline ML3 auf. In den geraden Rohrschenkeln der Schwingungsrohre entsprechen die Mittellinien also den Zylinderachsen der Rohrschenkel. Unter erster Schnittpunkt S1, bzw. zweiter Schnittpunkt S2 kann auch ein Schnittbereich, bzw. Schnittvolumen verstanden werden. Dies bedeutet, dass sich alle Mittellinien der verschiedenen Messrohrmodulen in einem Schnittbereich bzw. Schnittvolumen schneiden. Der Schnittbereich beträgt vorzugsweise wenige Quadratmillimeter, zum Beispiel 1 mm² bis 25 mm². Das Schnittvolumen beträgt vorzugsweise wenige Kubikmillimeter, zum Beispiel 1 mm³ bis 125 mm³.

Der kontaktlose Temperatursensor 12 ist im Trägermodul 10 derart angeordnet, dass wenn ein Messrohrmodul 20, 40, 60 im Trägermodul 10 aufgenommen ist, der kontaktlose Temperatursensor 12 auf den ersten Schnittpunkt S1 oder den zweiten Schnittpunkt S2 gerichtet ist. Somit wird erreicht, dass eine Ausrichtungsachse des Temperatursensors 12, entlang welcher das Messsignal des Temperatursensors 12 verläuft, den ersten Schnittpunkt S1 bzw. den zweiten Schnittpunkt S2 schneidet. Dies ermöglicht, dass das Messsignal, beispielsweise ein optisches Infrarotsignal des Temperatursensors 12 für jedes Messrohrmodul 20, 40, 60 auf eine Oberfläche des Schwingungsrohrs 22, 42, 62 trifft, welche orthogonal zur Ausrichtungsachse des Temperatursensors 12 ist. Das Messignal wird somit dank der orthogonal angeordneten Oberfläche des Schwingungsrohrs 22, 42, 62 entlang der Ausrichtungsachse optimal zurück zum Temperatursensor 12 gespiegelt, wodurch eine präzise Temperaturmessung ermöglicht wird.

Gemäß einer nicht dargestellten Ausführungsform der Messrohrmodule 20, 40, 60 ist zwischen dem ersten Rohrbogen 27, 47, 67 und dem zweiten Rohrbogen 28, 48, 68 ein Rohrstück angeordnet. Das Rohrstück ist beispielsweise gerade, oder gekrümmt. Ein derartiges Rohrstück ermöglicht zum Beispiel, dass für den sekundären Erregerkörper 23, 43, 63 ausreichend Platz zur Verfügung steht.

Wie in Figur 5 dargestellt, erstrecken sich der erste Rohrschenkel 25, 45, 65 und der zweite Rohrschenkel 26, 46, 66 zueinander vorzugsweise parallel. Selbstverständlich ist es auch möglich, dass der erste Rohrschenkel 25, 45, 65 und der zweite Rohrschenkel 26, 46, 66 zueinander nicht parallel angeordnet sind, vorausgesetzt, dass die zwei Rohrschenkel symmetrisch zu einer Längsachse Y des Messrohrmoduls 20, 40, 60 angeordnet sind.

Gemäß der in Figur 1 dargestellten Ausführungsform weist jedes Messrohrmodul 20, 40, 60 mindestens zwei identische Schwingungsrohre 22, 42, 62 auf. Soweit es technisch sinnvoll ist, kann auch jedes Messrohrmodul 20, 40, 60 mehr als zwei identische Schwingungsrohre aufweisen.

Wie in Figur 5 veranschaulicht, erstrecken sich die jeweiligen Messrohrmodule 20, 40, 60 entlang der Längsachse Y, zu welcher die jeweiligen Schwingungsrohre 22, 42, 62 symmetrisch sind. Alle Messrohrmodule 20, 40, 60 weisen vorzugsweise dieselbe Erstreckungslänge entlang der Längsachse Y auf.

Figur 6 zeigt, dass sich die Messrohrmodule 20, 40, 60 entlang einer Längsachse Y, zu welcher das Schwingungsrohr 22, 42, 62 symmetrisch sind, erstrecken. Vorzugsweise schneiden sich alle Schwingungsrohre 22, 42, 62 in einem dritten Schnittpunkt S3, welcher auf der Längsachse Y liegt, wenn die Schwingungsrohre 22, 42, 62 jeweils im Trägermodul 10 angeordnet sind. In anderen Worten erstreckt sich jedes Schwingungsrohr 22, 42, 62, wenn es im Trägermodul 10 angeordnet ist, bis zum Schnittpunkt S3. Der Schnittpunkt S3 bildet somit auch einen Scheitelpunkt für die Schwingungsrohre 22, 42, 62.

Wenn die Rohrbögen 27, 28, 47, 48, 67, 68 der Schwingungsrohre 22, 42, 62 einen identischen Innenradius IR1, IR2, IR3 aufweisen, ist der Schnittpunkt S3 außen an den Schwingungsrohren angeordnet, wie in Figur 6 dargestellt.

Wenn die Innenradien IR1, IR2, IR3 der Rohrbögen identisch sind, sind die Innenseiten aller erster Rohrschenkel 25, 45, 65, sowie die Innenseiten aller zweiter Rohrschenkel 26, 46, 66, zueinander bündig, wenn die Messrohrmodule 20, 40, 60 übereinander angeordnet werden (siehe Figur 5). Selbstredend bezieht sich hier die Bezeichnung "Innenseite" auf die Biegung des Messrohrmoduls, also dem Innenradius zugewandt.

Wenn die Rohrbögen 27, 28, 47, 48, 67, 68 der Schwingungsrohre 22, 42, 62 einen identischen Außenradius AR1, AR2, AR3 aufweisen, ist der Schnittpunkt S3 innen an den Schwingungsrohren angeordnet (nicht dargestellt). Selbstredend bezieht sich hier die Bezeichnung "innen" auf die Biegung des Messrohrmoduls, also dem Innenradius zugewandt.

Wenn die Außenradien AR1, AR2, AR3 der Rohrbögen identisch sind, sind die Außenseiten aller erster Rohrschenkel 25, 45, 65, sowie die Außenseiten aller zweiter Rohrschenkel 26, 46, 66, zueinander bündig, wenn die Messrohrmodule 20, 40, 60 übereinander angeordnet werden (nicht dargestellt). Selbstredend bezieht sich hier die Bezeichnung "Außenseite" auf die Biegung des Messrohrmoduls, also dem Innenradius abgewandt.

### Bezugszeichenliste

- 1: modulares Messgerät
- 10: Trägermodul
- 11: Aufnahme
- 12: Temperatursensor
- 13: primäre Erregerkomponente
- 14: primäre Sensorkomponente
- 15: Steuereinheit

- 20: erstes Messrohrmodul
- 21: Fixierung des ersten Messrohrmoduls
- 22: Schwingungsrohr des ersten Messrohrmoduls
- 23: sekundäre Erregerkomponente des ersten Messrohrmoduls
- 24: sekundäre Sensorkomponente des ersten Messrohrmoduls
- 25: erster Rohrschenkel des ersten Messrohrmoduls
- 26: zweiter Rohrschenkel des ersten Messrohrmoduls
- 27: erster Rohrbogen des ersten Messrohrmoduls
- 28: zweiter Rohrbogen des ersten Messrohrmoduls

- 40: zweites Messrohrmodul
- 41: Fixierung des zweiten Messrohrmoduls
- 42: Schwingungsrohr des zweiten Messrohrmoduls
- 43: sekundäre Erregerkomponente des zweiten Messrohrmoduls
- 44: sekundäre Sensorkomponente des zweiten Messrohrmoduls
- 45: erster Rohrschenkel des zweiten Messrohrmoduls
- 46: zweiter Rohrschenkel des zweiten Messrohrmoduls
- 47: erster Rohrbogen des zweiten Messrohrmoduls
- 48: zweiter Rohrbogen des zweiten Messrohrmoduls

- 60: drittes Messrohrmodul
- 61: Fixierung des dritten Messrohrmoduls
- 62: Schwingungsrohr des dritten Messrohrmoduls
- 63: sekundäre Erregerkomponente des dritten Messrohrmoduls
- 64: sekundäre Sensorkomponente des dritten Messrohrmoduls
- 65: erster Rohrschenkel des dritten Messrohrmoduls
- 66: zweiter Rohrschenkel des dritten Messrohrmoduls
- 67: erster Rohrbogen des dritten Messrohrmoduls
- 68: zweiter Rohrbogen des dritten Messrohrmoduls

- A1: Abstand Ebene E1 zur Ebene E2
- A2: Abstand Ebene E1 zur Ebene E3
- A3: Abstand Ebene E2 zur Ebene E3

- AR1: Außenradius des ersten Messrohrmoduls
- AR2: Außenradius des zweiten Messrohrmoduls
- AR3: Außenradius des dritten Messrohrmoduls

- D1: Differenz der Rohrdurchmesser zwischen dem ersten Messrohrmodul und dem zweiten Messrohrmodul
- D2: Differenz der Rohrdurchmesser zwischen dem ersten Messrohrmodul und dem dritten Messrohrmodul
- D3: Differenz der Rohrdurchmesser zwischen dem zweiten Messrohrmodul und dem dritten Messrohrmodul

- E1: Ebene des ersten Messrohrmoduls
- E2: Ebene des zweiten Messrohrmoduls
- E3: Ebene des dritten Messrohrmoduls

- IR1: Innenradius des ersten Messrohrmoduls
- IR2: Innenradius des zweiten Messrohrmoduls
- IR3: Innenradius des dritten Messrohrmoduls

- ML1: Mittellinie des ersten Messrohrmoduls
- ML2: Mittellinie des zweiten Messrohrmoduls
- ML3: Mittellinie des dritten Messrohrmoduls

- RD1: Rohrdurchmesser des ersten Messrohrmoduls
- RD2: Rohrdurchmesser des zweiten Messrohrmoduls
- RD3: Rohrdurchmesser des dritten Messrohrmoduls

- VP1: primärer Verbindungspunkt des ersten Messrohrmoduls
- VP2: primärer Verbindungspunkt des zweiten Messrohrmoduls
- VP3: primärer Verbindungspunkt des dritten Messrohrmoduls

- VS1: sekundärer Verbindungspunkt des ersten Messrohrmoduls
- VS2: sekundärer Verbindungspunkt des zweiten Messrohrmoduls
- VS3: sekundärer Verbindungspunkt des dritten Messrohrmoduls

## Patentansprüche

1. Modulares Messgerät (1) zum Ermitteln einer Dichte eines Messmediums, umfassend:
ein Trägermodul (10), ein erstes Messrohrmodul (20) und mindestens ein weiteres Messrohrmodul (40, 60),
wobei das Trägermodul (10) eine Aufnahme (11) zum lösbaren Befestigen des ersten Messrohrmoduls (20) oder des mindestens einen weiteren Messrohrmoduls (40, 60), einen kontaktlosen Temperatursensor (12) zum Ermitteln einer Schwingungsrohrtemperatur, eine primäre Erregerkomponente (13) sowie eine primäre Sensorkomponente (14) aufweist,
wobei jedes Messrohrmodul (20, 40, 60) eine zur Aufnahme (11) des Trägermoduls (10) komplementäre Fixierung (21, 41, 61), ein Schwingungsrohr (22, 42, 62), eine zur primären Erregerkomponente (13) komplementäre sekundäre Erregerkomponente (23, 43, 63) und eine zu primären Sensorkomponente (14) komplementäre sekundäre Sensorkomponente (24, 44, 64) aufweist,
wobei jedes Schwingungsrohr (22, 42, 62) der Messrohrmodule (20, 40, 60) einen verschiedenen Rohrdurchmesser (RD1, RD2, RD3), einen geraden ersten Rohrschenkel (25, 45, 65), einen geraden zweiten Rohrschenkel (26, 46, 66), einen gekrümmten ersten Rohrbogen (27, 47, 67) und einen gekrümmten zweiten Rohrbogen (28, 48, 68) aufweist,
wobei die ersten Rohrschenkel (25, 45, 65) jeweils an einem primären Verbindungspunkt (VP1, VP2, VP3) mit den ersten Rohrbögen (27, 47, 67) verbunden sind, die ersten Rohrbögen (27, 47, 67) mit den zweiten Rohrbögen (28, 48, 68) verbunden sind, und die zweiten Rohrbögen (28, 48, 68) jeweils mit den ersten Rohrschenkeln (26, 46, 66) an einem sekundären Verbindungspunkt (VS1, VS2, VS3) verbunden sind,
wobei der primäre Verbindungspunkt (VP1, VP2, VP3) und der sekundäre Verbindungspunkt (VS1, VS2, VS3) je Messrohrmodul (20, 40, 60) in einer jeweiligen Ebene (E1, E2, E3) liegen,
wobei die Ebenen (E1, E2, E3) zueinander einen jeweiligen Abstand (A1, A2, A3) aufweisen, welcher einer Differenz (D1, D2, D3) zwischen den jeweiligen Rohrdurchmesser (RD1, RD2, RD3) entspricht,
wobei die ersten Rohrbögen (27, 47, 67) und die zweiten Rohrbögen (28, 48, 68) einen identischen Innenradius (IR1, IR2, IR3) oder einen identischen Außenradius (AR1, AR2, AR3) aufweisen,
so dass sich die den jeweiligen Schwingungsrohren (22, 42, 62) zugehörige Mittellinien (ML1, ML2, ML3) in einem ersten Schnittpunkt (S1) sowie in einem zweiten Schnittpunkt (S2) schneiden,
wobei der kontaktlose Temperatursensor (12) derart angeordnet ist, dass wenn ein Messrohrmodul (20, 40, 60) im Trägermodul (10) aufgenommen ist, der kontaktlose Temperatursensor (12) auf den ersten Schnittpunkt (S1) oder den zweiten Schnittpunkt (S2) gerichtet ist.

2. Modulares Messgerät (1) gemäß Anspruch 1, wobei zwischen dem ersten Rohrbogen (27, 47, 67) und dem zweiten Rohrbogen (28, 48, 68) ein Rohrstück angeordnet ist, welches den ersten Rohrbogen (27, 47, 67) und den zweiten Rohrbogen (28, 48, 68) verbindet.

3. Modulares Messgerät (1) gemäß Anspruch 2, wobei das Rohrstück gerade ist.

4. Modulares Messgerät (1) gemäß einem der Ansprüche 1 bis 3, wobei sich der erste Rohrschenkel (25, 45, 65) und der zweite Rohrschenkel (26, 46, 66) parallel zueinander erstrecken.

5. Modulares Messgerät (1) gemäß einem der vorhergehenden Ansprüche, wobei die sekundäre Erregerkomponente (23, 43, 63) des Messrohrmoduls (20, 40, 60) am Messrohrmodul (20, 40, 60) auf einer Längsachse (Y) angeordnet ist, wobei das Schwingungsrohr (22, 42, 62) zur Längsachse (Y) symmetrisch ist.

6. Modulares Messgerät (1) gemäß einem der vorhergehenden Ansprüche, wobei die primäre Erregerkomponente (13) eine Spule umfasst und die sekundäre Erregerkomponente (23, 43, 63) einen Permanentmagneten umfasst, oder wobei die sekundäre Erregerkomponente (23, 43, 63) eine Spule umfasst und die primäre Erregerkomponente (13) einen Permanentmagneten umfasst.

7. Modulares Messgerät (1) gemäß einem der vorhergehenden Ansprüche, wobei die sekundäre Sensorkomponente (24, 44, 64) am ersten Rohrschenkel (25, 45, 65) oder am zweiten Rohrschenkel (26, 46, 66) des Messrohrmoduls (20, 40, 60) angeordnet ist.

8. Modulares Messgerät (1) gemäß einem der vorhergehenden Ansprüche, wobei jedes Messrohrmodul (20, 40, 60) mindestens zwei identische Schwingungsrohre (22, 42, 62) aufweist.

9. Modulares Messgerät (1) gemäß einem der vorhergehenden Ansprüche, wobei sich die Messrohrmodule (20, 40, 60) entlang einer Längsachse (Y), zu welcher das Schwingungsrohr (22, 42, 62) symmetrisch ist, erstrecken, wobei alle Messrohrmodule (20, 40, 60) dieselbe Erstreckungslänge entlang der Längsachse (Y) aufweisen.

10. Modulares Messgerät (1) gemäß einem der vorhergehenden Ansprüche, wobei sich die Messrohrmodule (20, 40, 60) entlang einer Längsachse (Y), zu welcher das Schwingungsrohr (22, 42, 62) symmetrisch ist, erstrecken, wobei sich alle Schwingungsrohre (22, 42, 62) in einem dritten Schnittpunkt (S3) auf der Längsachse (Y) schneiden.

## Claims

1. Modular measuring device (1) for determining a density of a measuring medium, comprising: a carrier module (10), a first measuring tube module (20) and at least one further measuring tube module (40, 60),
wherein the carrier module (10) has a receptacle (11) for detachably fastening the first measuring tube module (20) or the at least one further measuring tube module (40, 60), a contactless temperature sensor (12) for determining an oscillating tube temperature, a primary exciter component (13) and a primary sensor component (14),
wherein each measuring tube module (20, 40, 60) comprises a fixation (21, 41, 61) complementary to the receptacle (11) of the carrier module (10), a vibration tube (22, 42, 62), a secondary exciter component (23, 43, 63) complementary to the primary exciter component (13) and a secondary sensor component (24, 44, 64) complementary to the primary sensor component (14),
wherein each oscillating tube (22, 42, 62) of the measuring tube modules (20, 40, 60) has a different tube diameter (RD1, RD2, RD3), a straight first tube leg (25, 45, 65), a straight second tube leg (26, 46, 66), a curved first tube bend (27, 47, 67) and a curved second tube bend (28, 48, 68)
wherein the first pipe legs (25, 45, 65) are each connected to the first pipe bends (27, 47, 67) at a primary connection point (VP1, VP2, VP3), the first pipe bends (27, 47, 67) are connected to the second pipe bends (28, 48, 68), and the second pipe bends (28, 48, 68) are each connected to the first pipe legs (26, 46, 66) at a secondary connection point (VS1, VS2, VS3),
whereby the primary connection point (VP1, VP2, VP3) and the secondary connection point (VS1, VS2, VS3) for each measuring tube module (20, 40, 60) lie in a respective plane (E1, E2, E3),
wherein the planes (E1, E2, E3) have a respective distance (A1, A2, A3) from one another, which corresponds to a difference (D1, D2, D3) between the respective pipe diameters (RD1, RD2, RD3),
wherein the first pipe bends (27, 47, 67) and the second pipe bends (28, 48, 68) have an identical inner radius (IR1, IR2, IR3) or an identical outer radius (AR1, AR2, AR3),
so that the center lines (ML1, ML2, ML3) associated with the respective oscillating tubes (22, 42, 62) intersect at a first intersection point (S1) and at a second intersection point (S2),
wherein the contactless temperature sensor (12) is arranged such that when a measuring tube module (20, 40, 60) is accommodated in the carrier module (10), the contactless temperature sensor (12) is directed towards the first intersection point (S1) or the second intersection point (S2).

2. Modular measuring device (1) according to claim 1, wherein a pipe section is arranged between the first pipe bend (27, 47, 67) and the second pipe bend (28, 48, 68), which pipe section connects the first pipe bend (27, 47, 67) and the second pipe bend (28, 48, 68).

3. Modular measuring device (1) according to claim 2, wherein the pipe section is straight

4. Modular measuring device (1) according to any one of claims 1 to 3, wherein the first tubular leg (25, 45, 65) and the second tubular leg (26, 46, 66) extend parallel to each other.

5. Modular measuring device (1) according to one of the preceding claims, wherein the secondary excitation component (23, 43, 63) of the measuring tube module (20, 40, 60) is arranged on the measuring tube module (20, 40, 60) on a longitudinal axis (Y), wherein the oscillating tube (22, 42, 62) is symmetrical to the longitudinal axis (Y).

6. Modular measuring device (1) according to any one of the preceding claims, wherein the primary excitation component (13) comprises a coil and the secondary excitation component (23, 43, 63) comprises a permanent magnet, or wherein the secondary excitation component (23, 43, 63) comprises a coil and the primary excitation component (13) comprises a permanent magnet.

7. Modular measuring device (1) according to one of the preceding claims, wherein the secondary sensor component (24, 44, 64) is arranged on the first tube leg (25, 45, 65) or on the second tube leg (26, 46, 66) of the measuring tube module (20, 40, 60).

8. Modular measuring device (1) according to one of the preceding claims, wherein each measuring tube module (20, 40, 60) comprises at least two identical vibration tubes (22, 42, 62).

9. Modular measuring device (1) according to one of the preceding claims, wherein the measuring tube modules (20, 40, 60) extend along a longitudinal axis (Y) to which the oscillation tube (22, 42, 62) is symmetrical, wherein all measuring tube modules (20, 40, 60) have the same extension length along the longitudinal axis (Y).

10. Modular measuring device (1) according to one of the preceding claims, wherein the measuring tube modules (20, 40, 60) extend along a longitudinal axis (Y) to which the oscillation tube (22, 42, 62) is symmetrical, wherein all oscillation tubes (22, 42, 62) intersect at a third intersection point (S3) on the longitudinal axis (Y).

## Revendications

1. Appareil de mesure modulaire (1) pour déterminer une densité d'un milieu de mesure, comprenant : un module de support (10), un premier module de tube de mesure (20) et au moins un autre module de tube de mesure (40, 60),
le module de support (10) présentant un logement (11) pour la fixation amovible du premier module de tube de mesure (20) ou du au moins un autre module de tube de mesure (40, 60), un capteur de température sans contact (12) pour déterminer une température de tube d'oscillation, un composant d'excitation primaire (13) ainsi qu'un composant de capteur primaire (14),
chaque module de tube de mesure (20, 40, 60) présentant une fixation (21, 41, 61) complémentaire au logement (11) du module de support (10), un tube d'oscillation (22, 42, 62), un composant d'excitation secondaire (23, 43, 63) complémentaire au composant d'excitation primaire (13) et un composant de capteur secondaire (24, 44, 64) complémentaire au composant de capteur primaire (14),
dans lequel chaque tube de vibration (22, 42, 62) des modules de tube de mesure (20, 40, 60) présente un diamètre de tube différent (RD1, RD2, RD3), une première branche de tube droite (25, 45, 65), une deuxième branche de tube droite (26, 46, 66), un premier coude de tube courbé (27, 47, 67) et un deuxième coude de tube courbé (28, 48, 68)
dans lequel les premières branches de tube (25, 45, 65) sont respectivement connectées aux premiers coudes de tube (27, 47, 67) en un point de connexion primaire (VP1, VP2, VP3), les premiers coudes de tube (27, 47, 67) sont connectés aux seconds coudes de tube (28, 48, 68), et les seconds coudes de tube (28, 48, 68) sont respectivement connectés aux premières branches de tube (26, 46, 66) en un point de connexion secondaire (VS1, VS2, VS3),
dans lequel le point de connexion primaire (VP1, VP2, VP3) et le point de connexion secondaire (VS1, VS2, VS3) pour chaque module de tube de mesure (20, 40, 60) sont situés dans un plan respectif (E1, E2, E3),
dans lequel les plans (E1, E2, E3) présentent entre eux une distance respective (A1, A2, A3) qui correspond à une différence (D1, D2, D3) entre les diamètres de tube respectifs (RD1, RD2, RD3),
dans lequel les premiers coudes de tube (27, 47, 67) et les seconds coudes de tube (28, 48, 68) ont un rayon intérieur identique (IR1, IR2, IR3) ou un rayon extérieur identique (AR1, AR2, AR3),
de sorte que les lignes médianes (ML1, ML2, ML3) associées aux tubes vibrants respectifs (22, 42, 62) se coupent en un premier point d'intersection (S1) ainsi qu'en un deuxième point d'intersection (S2),
dans lequel le capteur de température sans contact (12) est disposé de telle sorte que lorsqu'un module de tube de mesure (20, 40, 60) est reçu dans le module de support (10), le capteur de température sans contact (12) est dirigé vers le premier point d'intersection (S1) ou le second point d'intersection (S2).

2. Appareil de mesure modulaire (1) selon la revendication 1, dans lequel une pièce tubulaire est disposée entre le premier coude de tube (27, 47, 67) et le deuxième coude de tube (28, 48, 68), laquelle relie le premier coude de tube (27, 47, 67) et le deuxième coude de tube (28, 48, 68).

3. Appareil de mesure modulaire (1) selon la revendication 2, dans lequel le tronçon de tube est droit

4. Appareil de mesure modulaire (1) selon l'une quelconque des revendications 1 à 3, dans lequel la première branche de tube (25, 45, 65) et la deuxième branche de tube (26, 46, 66) s'étendent parallèlement l'une à l'autre.

5. Appareil de mesure modulaire (1) selon l'une quelconque des revendications précédentes, dans lequel le composant d'excitation secondaire (23, 43, 63) du module de tube de mesure (20, 40, 60) est disposé sur le module de tube de mesure (20, 40, 60) sur un axe longitudinal (Y), le tube vibrant (22, 42, 62) étant symétrique par rapport à l'axe longitudinal (Y).

6. Appareil de mesure modulaire (1) selon l'une quelconque des revendications précédentes, dans lequel le composant d'excitation primaire (13) comprend une bobine et le composant d'excitation secondaire (23, 43, 63) comprend un aimant permanent, ou dans lequel le composant d'excitation secondaire (23, 43, 63) comprend une bobine et le composant d'excitation primaire (13) comprend un aimant permanent.

7. Appareil de mesure modulaire (1) selon l'une quelconque des revendications précédentes, dans lequel le composant de détection secondaire (24, 44, 64) est disposé sur la première branche de tube (25, 45, 65) ou sur la deuxième branche de tube (26, 46, 66) du module de tube de mesure (20, 40, 60).

8. Appareil de mesure modulaire (1) selon l'une quelconque des revendications précédentes, dans lequel chaque module de tube de mesure (20, 40, 60) comprend au moins deux tubes vibrants identiques (22, 42, 62).

9. Appareil de mesure modulaire (1) selon l'une quelconque des revendications précédentes, dans lequel les modules de tube de mesure (20, 40, 60) s'étendent le long d'un axe longitudinal (Y) par rapport auquel le tube vibrant (22, 42, 62) est symétrique, tous les modules de tube de mesure (20, 40, 60) ayant la même longueur d'extension le long de l'axe longitudinal (Y).

10. Appareil de mesure modulaire (1) selon l'une quelconque des revendications précédentes, dans lequel les modules de tube de mesure (20, 40, 60) s'étendent le long d'un axe longitudinal (Y) par rapport auquel le tube de vibration (22, 42, 62) est symétrique, tous les tubes de vibration (22, 42, 62) se coupant en un troisième point d'intersection (S3) sur l'axe longitudinal (Y).
